# EUROPEAN PATENT SPECIFICATION

(11) **EP 1 576 564 B1**
(45) Date of publication and mention of the grant of the patent: **14.11.2018**
(21) Application number: 03776145.9
(22) Date of filing: 03.12.2003
(51) Int. Cl.: G09B 23/28

(54) **AN INTERVENTIONAL SIMULATOR CONTROL SYSTEM**
INTERVENTIONELLE SIMULATORSTEUERUNG
SYSTEME DE COMMANDE DE SIMULATEUR D'INTERVENTION

(30) Priority: 03.12.2002 SE 0203567; 03.12.2002 US 430346 P
(43) Date of publication of application: 21.09.2005
(73) Proprietor: Mentice AB, 411 03 Göteborg (SE)
(72) Inventor: GRUND-PEDERSEN, Jan, S-429 35 Kullavik (SE); OHLSSON, Fredrik, S-423 40 Torslanda (SE)
(74) Representative: Valea AB
(86) International application number: PCT/SE2003/001890
(87) International publication number: WO 2004/051601

(56) References cited:
- WO-A1-99/39317
- WO-A1-02/059859
- WO-A1-02/070980
- WO-A2-01/56491
- US-B1- 6 191 796
- US-B1- 6 267 599
- US-B1- 6 443 735

## Description

### TECHNICAL FIELD OF THE INVENTION

The present invention relates to a computerized apparatus for simulating an interventional operation, and in particular the simulator portion of the arrangement.

### BACKGROUND OF THE INVENTION

Principles of adult education, tenets of experiential learning, and theories addressing the development of expertise have all underscored the critical role experience plays in the learning process. State-of-the-art simulations can be successfully included in contemporary surgical and medical education to offer trainees and practicing physicians the requisite learning experiences based on these educational underpinnings. All learners can be offered opportunities to acquire the essential skills and to achieve specified competency levels based on standardized learning experiences. Simulations can be used to facilitate learning through the evaluation of performance and provision of immediate, individualized, and detailed feedback. Simulations offer controlled settings that allow repetition until the defined performance levels are achieved, decrease stress levels of learners, increase the confidence levels of learners, and increase safety in real settings by assuring the achievement of technical competence prior to work on patients. Practicing physicians can improve their skills and can learn new procedures emerging as a result of advances in science and technology through educational interventions involving the use of simulations. In addition, the use of simulations can help address practical issues, such as the demands on faculty time, by providing trainees the opportunities for independent learning and practice. The current emphasis on accountability and on assurance of the quality of health care may also be addressed through the use of such simulations and data on outcomes can be used to assure the public of the competence of physicians.

Simulations should be considered an essential part of every contemporary educational program that addresses technical skills development. They can be used to ensure effective teaching and learning, to provide valid and reliable means of assessment of the skills of learners, to yield information on specific weaknesses that require improvement, and to create individual proinstruction sets of the technical ability of learners. In order to achieve the desired results, specific curricula should be developed based on principles of adult education, experiential learning, and effective feedback. Such simulations may also be used in programs of continuing professional education and certification. The initial investment of resources needed for the development and acquisition of simulations and for the creation of training programs that incorporate them effectively in educational models is readily offset by the numerous advantages resulting from expeditious performance of procedures in the operating room, enhancement of patient safety, and decrease in the faculty time needed to teach learners various technical skills. Such simulations may also be used to assess the effectiveness of educational efforts and even to select individuals for training. Thus, the simulations have the potential to make a major impact on programs of surgical and medical education of the future.

As a result of the rapid developments within the computer technique, simulations, especially for the purpose of surgical and medical education, have improved considerably. However, the presently known apparatus and methods do not allow a full range simulation of different instruments used.

United States Patent No. 6,106,301 discloses an interventional radiology interface apparatus and method interfaces peripherals in the form of mock medical instruments to a medical procedure simulation system to enable performance of a medical procedure on a virtual patient. The interface apparatus includes a guidewire, catheter and sheath, an injection syringe, an inflation syringe and a foot switch to realistically simulate the instruments utilized during an actual medical procedure. A user manipulates guidewire, catheter and sheath peripherals to traverse an arterial network toward a simulated blockage shown on the medical procedure simulation system display. The foot switch controls the display to provide a fluoroscope image showing the position of the guidewire, catheter, sheath and blockage within the arterial network. The injection syringe may be manipulated to simulate injections of contrast fluid or other pharmaceutical substances through the catheter or sheath into the virtual patient. When a guidewire is positioned past the simulated blockage within the arterial network, the catheter is exchanged for a balloon-tipped angioplasty catheter, and the inflation syringe is manipulated to simulate inflation of the balloon to reduce the blockage. In addition, the interface apparatus may apply force feedback to the guidewire and catheter to simulate forces encountered by these instruments during an actual medical procedure. The interface apparatus measures peripheral manipulation and transfers these measurements via a processor to the medical procedure simulation system to enable simulation of the medical procedure.

US6267599 discloses a system for producing highly realistic, real-time simulated operating condition for interactive training of persons to perform minimally invasive surgical procedures involving implements that are inserted and manipulated through small incisions in the patient. The virtual environment for this training system includes a housing with small opening. An implement simulating a surgical implement is inserted into the opening and manipulated relative to the housing. A movement guide and sensor assembly monitors the location of the implement relative to the housing and provides data about the implement's location and orientation within the housing. The reported data is interpolated by a computer processor, which utilizes a database of information representing a patient's internal landscape to create a computer model of the internal landscape of the patient. With reference to this computer model, the processor controls the occurrence of force feedback opposing the motion of the implement. A two-dimensional image representing the implement, as it would appear within the patient is generated by a processor-controlled video imaging system based on the computer model of the patient's internal landscape. This computer image of the implement is then merged with a video image loop of a patient's internal landscape as it appears through a heartbeat and breathing cycle, and the merged image is displayed on a video display. The combined elements of real-time visual representation and interactive tactile force feedback provide a virtual training simulation with all elements of actual operation conditions, minus a live patient. The system according to this invention handles only one instrument.
WO 02/070980 describes a system and method for simulating image-guided medical procedures, particularly those relying on interventional and/or diagnostic devices such as catheters. This document shows in a simplfied embodiment a system for simultaneously simulating a plurality of simulated instruments; however, real instruments cannot be used and they cannot be used and simulated with each other through the same interface. It is thus not possible to obtain a realistic simulation where instruments act nested with other and interact with each other.

### SUMMARY OF THE INVENTION

The main object of the preferred embodiment of the invention is to present a novel and effective method and system for a real-time surgical simulations, preferably cardiovascular or endovascular diagnostic or interventional procedures. Therefore, aspects of the invention are disclosed in independent claims 1, 11 and 19.

The instructional system that is wrapped around the simulation provides a framework for learning.

Therefore, an interventional procedure simulation system, is provided comprising a control unit and an interface unit, the control unit communicating with the interface unit to simulate handling of a number of simulated instruments simultaneously interfaced by the interface unit, the control unit further comprising an instruction set, comprising: a first instruction set for handling and processing input from the user, based on the input, generating a second instruction set for controlling the interface, a first data set comprising characteristics for the instruments, a second data set comprising data on a body part to be simulated, and a third instruction set for generating control signals relating to an interaction between the simulated instruments and a surrounding geometry relating to a part of the simulated body part. The system of the invention can be used for many purposes, such as diagnostic, a cardiovascular or endovascular simulation system. Both real instruments and dummy instruments may be used; the instruments are simulated assuming that they interact nested, i.e. inserted into each other. A user's movements of the instruments, a surrounding simulated anatomy and other present instruments, affect a shape of an instrument simulated and displayed. Preferably, each instrument collisions with simulated surrounding calculations are executed by the control unit, which affects the shape and position of the instrument in the simulated body part. In the most preferred mode, a sum of all instrument properties is considered, such that each nested tool can be moved and rotated independently of the other and the movements and rotations are propagate to other instruments. For simulation purposes, an instrument is a distal part of a tool, or unique features at the distal end of a tool. Different instrument types can be used comprising balloons, stents, electrodes, wires, catheters, distal protection, etc. Each instrument type has different properties associated to it and provided as an instruction set, which describes substantially all properties of the instrument. Thus, it is possible to simulate new instruments by obtaining geometrical information on them. The properties of the instruments further describe interaction with surrounding geometry, visual properties, stiffness, shape etc.

In a preferred embodiment, the system comprises a model used for rendering objects depending on properties to be displayed and a collision model for computing collisions between the simulated instrument and body part. A model of the body or part of the body part is a three-dimensional data obtained through a body scanning.

The invention also relates to a method for simulating an interventional procedure, comprising the steps of: providing a control unit and an interface unit, the control unit communicating with the interface unit to simulate handling of a number of instruments simultaneously interfaced by the interface unit, providing a first instruction set for handling and processing input from the user, generating a second instruction set based on the input, for controlling the interface, retrieving information on the instrument comprising a first data set comprising characteristics for the instruments, providing a second data set comprising data on a body part to be simulated, and generating control signals relating to interaction between the instrument and a surrounding geometry by a third instruction set. The method also comprises simulating the instruments assuming that they interact nested, i.e. inserted into each other. The method also comprises changing instrument simulated and displayedbased on a user's movements of the instruments, a surrounding simulated anatomy and other present instruments, effect a shape of an instrument simulated and displayed. For nestled instruments, the method also comprises considering a sum of all instrument properties, such that each nested tool can be moved and rotated independently of the other and the movements and rotations are propagate to other instruments. Preferably, an instrument is a distal part of a tool, or unique features at the distal end of a tool. As different instrument types can be used comprising balloons, stents, electrodes, wires, catheters, distal protection, etc., the invention is highly flexible. Each instrument type has different properties associated to it and provided as an instruction set, which describes substantially all properties of the instrument. The properties of the instruments further describe interaction with surrounding geometry, visual properties, stiffness, shape etc.

The invention is best realized as a computer program for interventional procedure simulation in a system comprising a control unit and an interface unit, and the program comprises: a communication instruction set for communication between the control unit and the interface unit, a first instruction set for simulating handling of a number of simulated instruments simultaneously interfaced by the interface unit, the control unit further comprising an instruction set, comprising: a second instruction set for handling and processing input from the user, a third instruction set for controlling the interface, a first data set comprising characteristics for the instruments, a second data set comprising data on a body part to be simulated, a fourth instruction set for generating control signals relating to an interaction between the simulated instruments and a surrounding geometry relating to a part of the simulated body part, and a fifth instruction set for outputting simulation on a visualisation member.

The invention also concerns a program storage device readable by a machine and encoding a program of instructions for executing the computer program for interventional procedure simulation.

The invention also concerns a computer readable medium having computer readable program code embodied therein to enable an interventional procedure simulation in a system comprising a control unit and an interface unit, the program comprising: a communication instruction set for communication between the control unit and the interface unit, a first instruction set for simulating handling of a number of simulated instruments simultaneously interfaced by the interface unit, the control unit further comprising an instruction set, comprising: a second instruction set for handling and processing input from the user, a third instruction set for controlling the interface, a first data set comprising characteristics for the instruments, a second data set comprising data on a body part to be simulated, a fourth instruction set for generating control signals relating to an interaction between the simulated instruments and a surrounding geometry relating to a part of the simulated body part, and a fifth instruction set for outputting simulation on a visualisation member.

Moreover, the invention relates to a propagated signal for comprising a digitalized program code embodied therein to enable an interventional procedure simulation in a system comprising a control unit and an interface unit, the program comprising: a digitalized communication instruction set for communication between the control unit and the interface unit, a digitalized first instruction set for simulating handling of a number of simulated instruments simultaneously interfaced by the interface unit, the control unit further comprising an instruction set, comprising: a digitalized second instruction set for handling and processing input from the user, a digitalized third instruction set for controlling the interface, a digitalized first access code for accessing a first data set comprising characteristics for the instruments, a digitalized second access code for accessing a second data set comprising data on a body part to be simulated, a digitalized fourth instruction set for generating control signals relating to an interaction between the simulated instruments and a surrounding geometry relating to a part of the simulated body part, and a digitalized fifth instruction set for outputting simulation on a visualisation member.
The invention also relates to a system for an interventional procedure simulation, the system comprising a control unit and an interface unit, the system further comprising: means for communication between the control unit and the interface unit for receiving at least one instrument used in the interventional procedure, means for receiving three-dimensional information on a body part to be simulated, means for generating control signals relating to an interaction between the instruments and a surrounding geometry relating to a part of the simulated body part. The three-dimensional information is obtained through a scanning process.
The invention also relates to a system for an interventional procedure simulation learning, the system comprising a control unit and an interface unit, the system further comprising: means for communication between the control unit and the interface unit for receiving at least one instrument used in the interventional procedure, means for receiving three-dimensional information on a body part to be simulated, means for generating control signals relating to an interaction between the instruments and a surrounding geometry relating to a part of the simulated body part, and means for recording the simulation.
The invention also relates to a method of an interventional procedure training, using a system comprising a control unit and an interface unit, the method comprising: using an interventional procedure tool to be simulated in the interface device, simulating an interaction between the instruments and a surrounding geometry relating to a part of the simulated body part, using the simulation for training the user.

### BRIEF DESCRIPTION OF THE DRAWINGS

In the following, the invention will be further described in a non-limiting way with reference to the accompanying drawings, in which:
- Fig. 1: schematically illustrates a block diagram according to one embodiment of the invention,
- Fig. 2: is a block diagram illustrating the kernel set-up according to the invention,
- Fig. 3: is a fluoroscopic image generated with the system according to the invention,
- Fig. 4: is a flow diagram illustrating functional steps of a part of the invention,
- Fig. 5: is a schematic illustration of interface device according to one embodiment of the invention,
- Fig. 6: illustrates an image of Visible Models,
- Fig. 7: illustrates an image of Collision Geometries,
- Fig. 8: illustrates a schematic vessel structure,
- Fig. 9: is a structured vessel hierarchy according to Fig. 8, and
- Figs. 10 and 11: are images of user interfaces according to one embodiment of the invention.

### DETAILED DESCRIPTION OF THE EMBODIMENTS

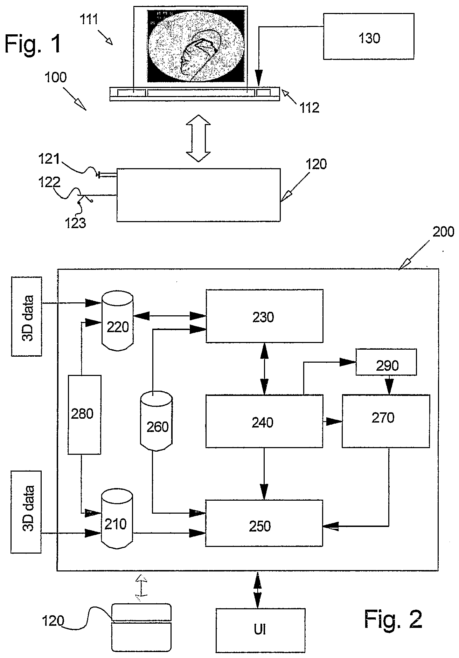

An exemplary embodiment of a simulation apparatus according to the invention is schematically illustrated in Fig. 1. The apparatus 100 comprises a computer unit 110 and an interface device 120. The computer unit 110 can be a conventional PC or similar, or a unit integrated with the interface device 120. The computer unit according to this embodiment communicates with a display unit 111, an input device 112 such as a keyboard and a mouse, and a communication interface (not shown).

A user, e.g. a surgeon/physician, running a simulation uses the instruments connected to the interface device to practise a procedure.

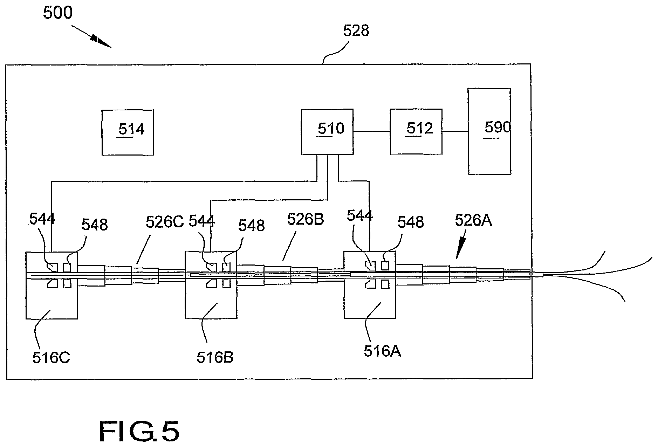

An interface device 500, schematically illustrated in Fig. 5, as a preferred embodiment, is arranged to receive a number of instruments, dummies/real, preferably at least two instruments. The device comprises a number of moveable carriages 516A-516C corresponding to the number of the instruments, a common track 520, and an interconnecting member 526 provided as a telescopic tube. The interconnecting member 26 interconnects the carriages 516A-516C serially. Each carriage is provided with an opening for enabling reception of the instruments. Each carriage 516A-516C further comprises members to receive and lock at least one of the instruments, and members for receiving a movement from the instrument dummy and generating a force fed back to the instrument dummy with respect to a simulation characteristic. Preferably, each carriage comprises a detecting arrangement for detecting the type of the instrument dummy inserted through the interconnecting member. The interface device is connected to the control unit (PC) to measure the movement of each carriage and regulate the movement by means of a speed regulator and a distance regulator. Each carriage is connected with a gear belt transmission for driving along the track 520. Each carriage is provided with a crank block, which is arranged on a torque wheel. The crank block is provided with a mating surface, which is pressed towards a collet that grips the instrument wire. Moreover, each carriage is arranged with an outlet, which is provided with a detecting member, which detects presence of an instrument in the carriage. The detecting member is arranged to detect the thickness of each instrument. The optical sensor detects presence of an instrument in the carriage. The control unit measures a longitudinal movement and a movement of rotation, of the instrument and gives force-feedback in the longitudinal direction and in the direction of rotation, of the instrument according to received force and torque. A locking member is arranged to clamp an instrument, which instrument is attached to a central wall. The locking member comprises a torque wheel, which is arranged in the central wall. The crank block is provided inside the torque wheel, which crank block moves in longitudinal direction. The crank block is fixed in the direction of rotation.

The core of the system is a control kernel, best embodied in form of a software based control system, which is loaded into the memory of the computer unit. Then, the software kernel loads a three-dimensional geometry, e.g. representing vessels, heart, etc, and tool descriptions. The representations are preferably provided as data files comprising for example length segments (with variable length)), diameter (inner and outer), angel with respect to the preceding (shape), rigidity, if there is a balloon or EPD, or electrode tip, etc., "radioopacity", etc., pressure table for the balloon and so on.

The movements of the tools are registered by the interface device and fed back to the kernel. There, the supposed position and shape of the tool is calculated. The result is displayed as a synthetic fluoroscopic image on the display 111. An important and novel issue is that in all applications, nested tools are used and all are active. The instruments can be manipulated independently at any time, and will affect each other all the time.

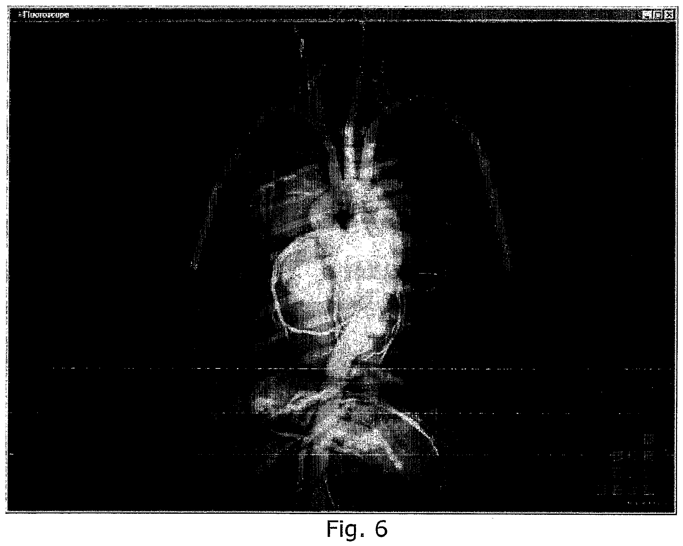

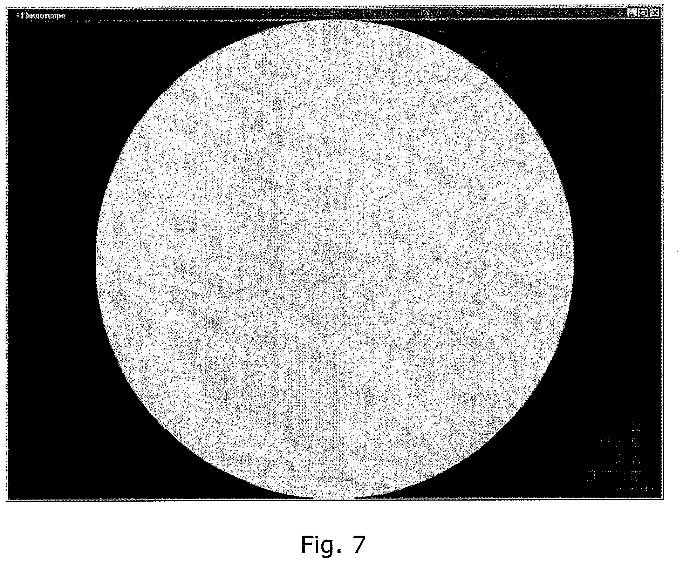

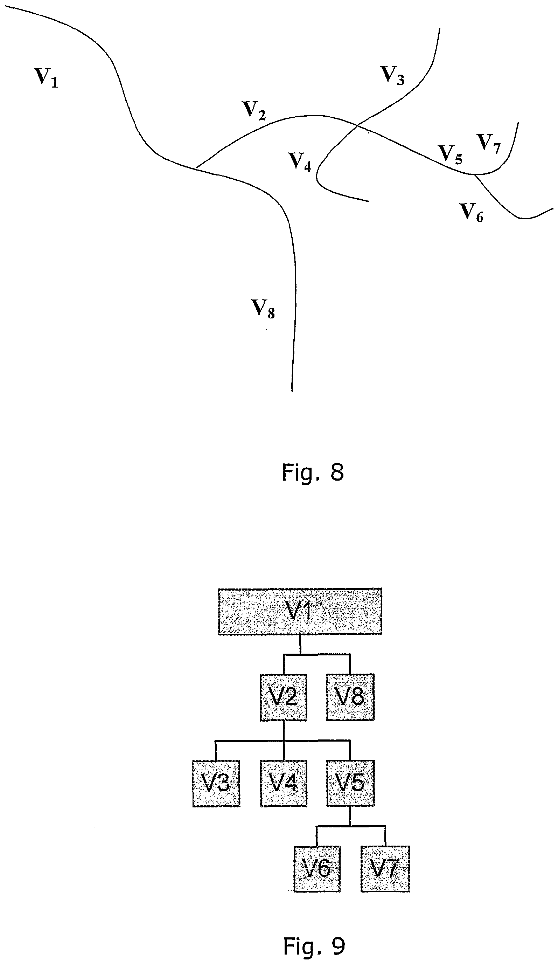

The kernel 200 is schematically illustrated in Fig. 2. In simulation, a patient is represented by a three-dimensional geometry. Each "organ" of a patient is separate, with different visible/physical properties, for example a bone is denser than vessels, a kidney has low visibility but gradually becomes more visible as a contrast medium is injected, and can be animated independently (e.g. the heart and lungs have different frequencies). The 3D geometry are provided in two representations:
- Visible Models (VMs) 210 are used for rendering purposes, see for example Fig. 6. Depending on properties they are displayed differently on the fluoroscopic display. The density for different tissues is reflected in the visibility properties.
- Coupled to the VMs are Collision Geometries (CGs) 220. Each vessel segment, for example, consists of connected cones (each vessel segment consists of many cones). One example is illustrated in Fig. 7. According to the most preferred embodiment of the invention, the vessels are arranged in a hierarchy. All vessels are provided in a database having a structured hierarchy as illustrated in Figs. 8 and 9, which tells how vessels connect. Sub-functions such as Haptics 230, Physics 240, Tools 260, Fluids 270, Dye 290 etc., (further described in the following) use these to compute collisions, forces, fluid flows, etc. The CGs are not visible, and usually have less resolution than the corresponding Model. However, a change in a CG will also result in a change in the corresponding Model (described in more detail below.) The CG also has properties (per cone), which reflect stiffness; e.g., normal vessels have the same stiffness, but a lesion can be calcified and hence stiffer. Depending on, for example the vessel stiffness, the same tool could interact differently with different parts of a vessel.

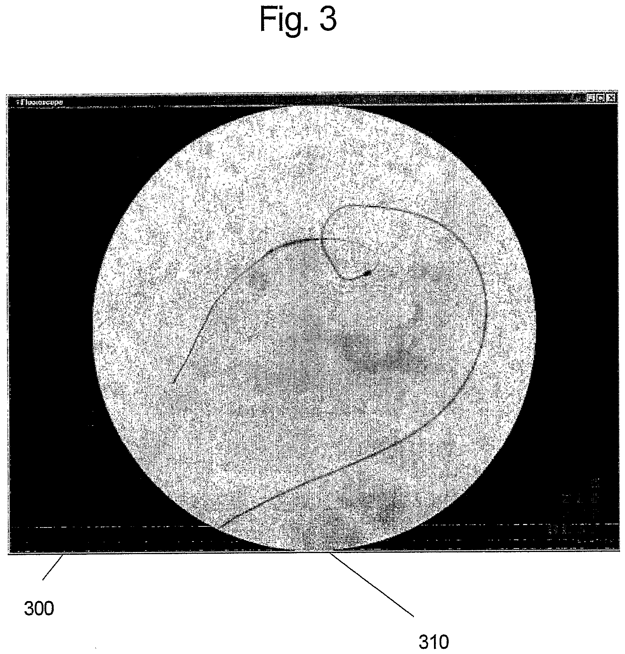

Fig. 3 illustrates a fluoroscopic image of a cardiovascular procedure. The system reproduces the physics and physiology of the human cardiovascular system in the thorax.

This simulation can be combined with a haptic interface (230) to provide the user with an intuitive way to interact with the simulation. In this case, the training system consists of the software simulation of the cardiovascular system, the haptic interface device, the instructional system and two monitors, one for the synthetic x-ray and one for the instructional system. The simulation consists of modules replicating the haemodynamics, blood flow and dye contrast media mixing, and catheter-vasculature physical interaction. In addition, a module produces a synthetic x-ray image to replicate the fluoroscopic image used by interventional cardiologists to guide them during their work. The algorithms used in the simulator are adapted from the cardiovascular modeling and analysis literature. The vessels 300 and a catheter 310 are illustrated in the image.

The 3D geometry (both VMs and CGs) can be constructed in different ways:
- They can be modeled in a 3D modeling software, i.e. from scratch using anatomy books, video clips, etc as references only.
- They can be reconstructed from real patient data, e.g. obtained through scans with CT, MRI, Ultrasound, fluoroscope, etc.

Thus, for the software kernel, it is not important how the 3D geometry is constructed, and according to one of the most important features of the invention, a real-time simulation can be obtained as soon as patient data is optioned in three dimensions.

A Physics function 240 calculates the "behavior" of the instruments; Instruments in this context meaning long, flexible instruments, either hollow tubes or rigid wires. The instruments are nested (inside each other) and the maximum number of simultaneous tools according to this embodiment is three. Each tool has its properties, i.e. "natural shape", stiffness, length, diameters, radioopacity, etc. The properties are described in separate instruction sets for each instrument. The instruction sets are stored in a data storing means 260. The user's movements, surrounding anatomy and other present tools, will affect the shape of the tool. For each tool, collisions with the CG are calculated (for each tool only the part that is outside any other tool), which affects the shape and position of it. In the case of nested tools, the "sum" of all tool properties is considered. A catheter, for example, with a wire inside will act stiffer than the catheter alone. In addition, the shape of the catheter will be different with and without the wire inside (if the wire is relatively stiff compared to the catheter). Each nested tool can be moved and rotated independently of the other, due to the structure of the interface device. These movements and rotations will propagate to the other tools.

Each instrument consists of a number of line segments represented by (dynamic) vectors. Dynamic vectors can have variable length. These are not evenly spaced, but depending on the curvature of the instruments, the space varies. The spacing of line segments changes as the instrument moves and bends.

The Physics Function 240 also calculates forces, both contact forces at each contact point (along each instrument and at the tip) and the forces that can be felt "at the base" (where the user holds the instruments). The forces are thus simulated and felt by the user through the interface device.

Preferably, by a tool is meant a distal part of an instrument, or unique features at the distal end of an instrument. Different tool types can be balloons, stents, electrodes, wires, catheters, distal protection, etc. Each unique "instrument" belongs to a tool type. Each tool type has different properties associated to it, e.g. a balloon type has a pressure table that describes the shape under different pressures. Consequently, an instrument of the type balloon then has its own unique pressure table. In other words: For each unique instrument, there is a instruction set, which describes all properties, e.g. stiffness, shape etc., described in the Physics above, and for instance a pressure table. In one application, for example, there can be more than 40 different balloons, but all of the same type.

The properties of the tools can be such that they describe interaction with surrounding geometry, or they can be more visual properties. As an example: A balloon expands under pressure. Ideally, it would expand according to a pressure table. However, the surrounding geometry will hold back the expansion. Depending on the "stiffness" of the vessel and the "stiffness" of the balloon itself the result will be different. The balloon also has two marker points. These are characteristic for balloons, but are only visual cues for the length of the balloon.

According to one embodiment, following exemplary tool types can be used:
- 0.035" guide wire
- Guide catheter
- Balloon
- Balloon expandable stent
- Self expandable stent
- Electrode
- "Coronary" (0.014") wire
- Embolic protection device filter
- Embolic protections device sheath
- Diagnostic catheter
- Middle guide catheter

The surgical simulations are usually done as cardiovascular operations. Thus, for the simulation purposes, the fluid flow (blood) is "pre-calculated", and done dependent on the geometry, e.g. long, narrow vessels will have lower flow than large, wide vessels. Each time the geometry changes (opened by a balloon, blocked by a balloon, etc.) the flow is recalculated. Preferably, as long as the geometry does not change the flow stays the same. As stated above, the flow depends on the geometric model. However, if the flow-splits are known for any bifurcations, then this can be given to the flow model as a starting statement.

It should be noted that it is possible to expand any vessel with a balloon, and the flow will be affected accordingly.

During a surgical operation, a contrast can be injected through hollow instruments. The contrast has its own speed and directions when it comes out of the instrument. Soon it is mixed with the blood, change direction and speed, and eventually "fade" out.

The system contains a dye simulation. A "Dye model" 290 calculates this behavior, and keeps track of the position currently having enough concentration of contrast to be visually seen on the fluoroscopic image. Dye uses the CGs to compute this, but renders on the VMs. To make this procedure quick, there is a mapping table executed in a pre-processor.

The system also comprises a Lesion Model 280. A lesion is currently only a narrowing of a vessel, which might have different properties than the rest of the vessel. It is accomplished in two ways: Either the 3D geometry is already provided with the lesion, which affects the fluid flow and makes it visible, or it can be applied on a "healthy" vessel. A lesion in the latter meaning would then only be a geometric deformation of the 3D geometry, together with some special properties for that part of the vessel segment. The properties may include stiffness, "vulnerability", i.e. the risk that it will break and cause emboli to break off, and more.

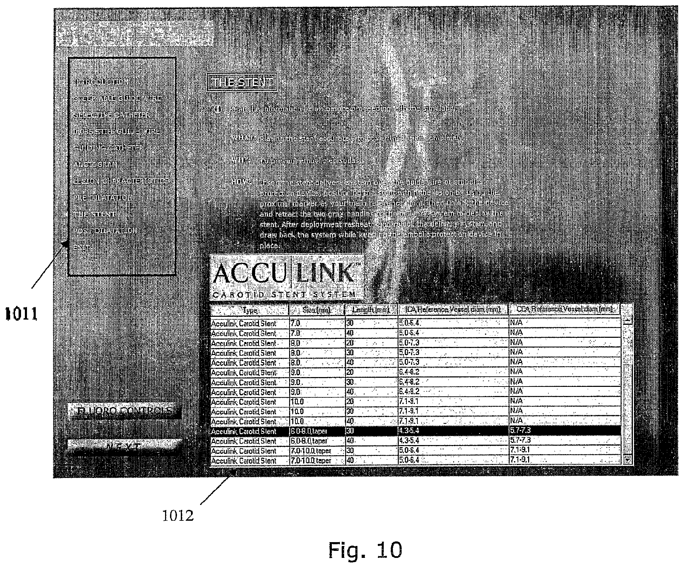

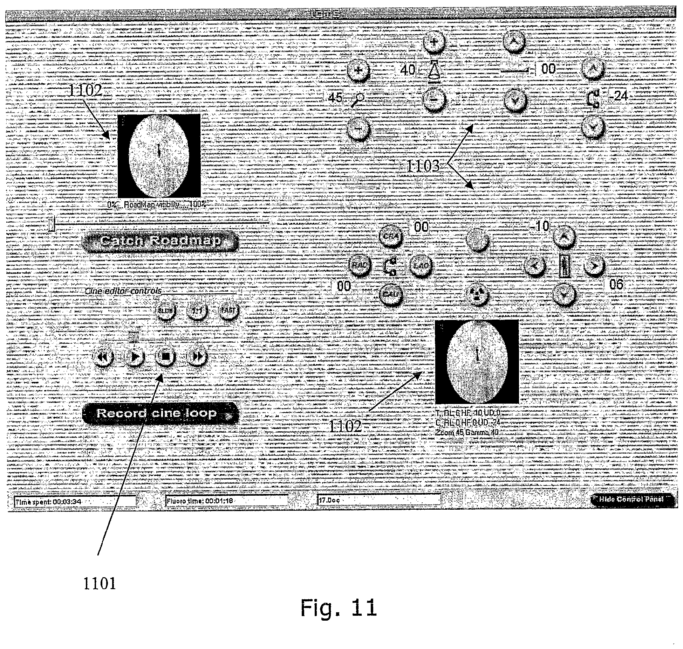

The apparatus further comprises a man-machine-interface for communication with the user. Figs. 10 and 11 are two screen examples. The user interface UI consists of instructional material that guides the user through the procedure and can be very different depending on the user's needs. According to Fig. 10, a user can select between a numbers of functions in field 1011 and choose a tool and its type in a tool field 1012. Fig. 11 illustrates an image of the fluoroscope interface, comprising control field 1101 fluoroscope images 1102 and image recording control field 1103.

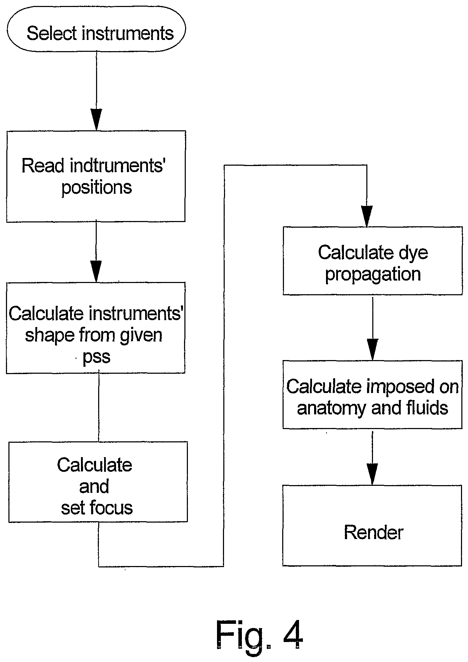

Referring now to the flow diagram of Fig. 4, the user selects what tools, he/she is going to use before doing so. The selection is sent to the kernel, which might pass it on to an interface device, for instance. For simulation, the interface device needs to know what instruments to expect to function properly. The kernel then uses the properties of that particular instrument in all of its calculations and renderings 250. The kernel also feeds back information to the user interface, such as time, fluoro time, amount of contrast used, tip forces, balloon/vessel ration, etc. This information can be used to give the user different types of feedback.

The rendered image resembles the real fluoroscopic image, in a conventional way. During the procedure, the inclination of the X-ray tube can be changed, the table the "patient" is lying on can be moved, the zoom can be changed, brightness adjusted, etc., as on a real fluoroscope. It can be done using control inputs on a screen, using a joystick or using a real fluoroscopic panel.

Recordings, so called cine loops, can also be done, as well as road maps, i.e. still images that can be used for guidance later on in the procedure.

In the following, the invention will be described in conjunction with a number of non-limiting examples:

### Coronary balloon dilatation (PTCA)/stenting

The specific tool set for this application consists of:
- Guiding catheter,
- guide wire 0.035",
- coronary wire 0.014",
- balloon dilatation catheter,
- and balloon expandable stent.

Also, distal protection can be used. The balloon and the stent can be used in same way; the balloon (also for the stent) interacts with the vessel, which expands (see above). The blood flow changes, and the contrast when injected. The stent is simulated in such a way that it is visible and stays in place as the balloon is deflated. It is also possible to enter with a larger balloon and inflate it again. This will influence both the stent and the vessel, so-called post dilatation. It is also possible to first inflate a balloon, before using a stent, so-called pre dilatation. Simulation is achieved by using force feedback, whereby a tight lesion is felt, when going through with a "large" balloon.

The procedure is done in such a way that first the guide catheter and guide wire are advanced to access either the right or left coronary vessel tree. Contrast is then injected through the catheter to locate the lesion/stenosis. The view can be changed to obtain a perfect visualization of the lesion. Images can also be exported to and be used by a separate QCA (Qualitative C Assessment) program, for length and width measurement. Then the user can decide what sizes of balloon/stent he/she wants to use. (Typically, some cine loops are recorded before and after balloon dilatation/stenting.) A thin guide wire (coronary wire) is first advanced through the catheter and into the vessel tree. The tip of the wire can be shaped in an angle (user selectable), and the wire is then steered through the vessel tree by rotating the wire, and pulling/pushing to find the right way past the lesion. The balloon/stent is then advanced on top of the wire, and positioned in the right place using the radioopaque markers. Contrast can be injected to see that it is positioned in the right place. Finally, the balloon/stent is inflated, held for some time, and then deflated. All the steps are simulated and can be performed as in real life.

### Over-the-wire lead placement:

The specific tool set for this application consists of:
- Guiding catheter,
- guide wire 0.035" (optional),
- venogram balloon,
- "coronary" wire 0.014",
- lead, and
- finishing wire.

Specifically, the venogram balloon is used to block the flow and allow contrast be injected on the opposite side of the balloon. In this case, it is assumed that we are in the veins and the blood flows in the opposite direction to what is desired to visualize the vessels. The lead wedges in place, both visually and using force feedback.

The procedure is as follows: The guide catheter is advanced to find the entry to the great cardiac vein (coronary sinus). Contrast is used to locate this. Then the vein is blocked with a balloon to visualize the side branches of the vessels, where the lead is going to be placed. The balloon is retracted, a 0.014" guide wire inserted (same procedure as above to navigate). Finally, on top of the wire the lead is advanced until it wedges in place. This can be seen and felt. Then the wire is removed. A finishing wire is inserted (or a lead extension), which is only used to hold the lead stable as the guiding catheter is removed.

In case of self-expandable stents, they are covered with a sheath, which is then retracted and the stent expands to a given size (but as it hits the vessel wall the final size will be dependent of the vessel "stiffness" and the properties of the stent itself). The properties of the stent, both visually, the way it expands and the effects it has on the vessel are simulated. The vessel can also be post dilated with a "regular" balloon afterwards.

A distal protection device stops emboli from moving further and block very small vessels (which can be devastating in the brain). A filter "basket" can then be used attached to a wire and at first covered with a sheath. The wire and sheath is positioned past the lesion, and then the sheath is retracted, leaving the basket as a protection for when the lesion is dilated. Afterwards a recovery sheath is advanced to close the basket and the two are together retracted. The behavior of the distal protection device is simulated, comprising how one handles it and the visible characteristics. Other types of protection devices are also possible to simulate, for example balloons that block the flow while dilating.

Tool shaping tool, is a result of having tools inside of each other with different shapes and stiffness, but it is being used many times and is difficult to simulate with other approaches than according to the present invention: Take a tool with a shape, a catheter for instance, and insert another tool, a stiff wire or a thinner catheter. As the inner tool is advanced, the shape of the outer tool is changed. This behavior comes "natural" in the present system, since the tools can move independently and the outmost shape is a result of all inner tools' stiffness/collisions.

According to the invention, it is also able to simulate tools that do not exist. This can be used for testing non-existing new tools. Thus, it is possible to prototype the new features, e.g. a new sensor at the tip or a completely new "smart" shape, etc. Then physicians can try the new tools (the interface device does not have to have the exact tool, the kernel will simulate the desired properties and change the apparent physical properties in real-time), and the system can measure whether the new features are used or not, compare the results to "standard" methods, etc. Besides interviewing the physicians and obtain their subjective opinions, there is also a way of obtaining objective measurements on the interaction between humans and instruments.

According to one aspect of the invention, a system for an interventional procedure simulation is provided. The system comprises a control unit and an interface unit, the system further comprising: means for communication between the control unit and the interface unit, means in the interface unit to simulate handling of a number of instruments simultaneously interfaced by the interface unit, interface member for receiving input from the user, means for handling and processing the input, means for controlling the interface, a first database for storing characteristics for the instruments, a second database for storing characteristics about a body part to be simulated, and means for generating control signals relating to an interaction between the simulated instruments and a surrounding geometry relating to a part of the simulated body part. The characteristics about a body part to be simulated are obtained through a scanning process.

The invention is best realized as a computer program for interventional procedure simulation in a system comprising a control unit and an interface unit, and the program comprises: a communication instruction set for communication between the control unit and the interface unit, a first instruction set for simulating handling of a number of simulated instruments simultaneously interfaced by the interface unit, the control unit further comprising an instruction set, comprising: a second instruction set for handling and processing input from the user, a third instruction set for controlling the interface, a first data set comprising characteristics for the instruments, a second data set comprising data on a body part to be simulated, a fourth instruction set for generating control signals relating to an interaction between the simulated instruments and a surrounding geometry relating to a part of the simulated body part, and a fifth instruction set for outputting simulation on a visualisation member.

The invention also concerns a program storage device readable by a machine and encoding a program of instructions for executing the computer program for interventional procedure simulation.

The invention also concerns a computer readable medium having computer readable program code embodied therein to enable an interventional procedure simulation in a system comprising a control unit and an interface unit, the program comprising: a communication instruction set for communication between the control unit and the interface unit, a first instruction set for simulating handling of a number of simulated instruments simultaneously interfaced by the interface unit, the control unit further comprising an instruction set, comprising: a second instruction set for handling and processing input from the user, a third instruction set for controlling the interface, a first data set comprising characteristics for the instruments, a second data set comprising data on a body part to be simulated, a fourth instruction set for generating control signals relating to an interaction between the simulated instruments and a surrounding geometry relating to a part of the simulated body part, and a fifth instruction set for outputting simulation on a visualisation member.

Moreover, the invention relates to a propagated signal for comprising a digitalized program code embodied therein to enable an interventional procedure simulation in a system comprising a control unit and an interface unit, the program comprising: a digitalized communication instruction set for communication between the control unit and the interface unit, a digitalized first instruction set for simulating handling of a number of simulated instruments simultaneously interfaced by the interface unit, the control unit further comprising an instruction set, comprising: a digitalized second instruction set for handling and processing input from the user, a digitalized third instruction set for controlling the interface, a digitalized first access code for accessing a first data set comprising characteristics for the instruments, a digitalized second access code for accessing a second data set comprising data on a body part to be simulated, a digitalized fourth instruction set for generating control signals relating to an interaction between the simulated instruments and a surrounding geometry relating to a part of the simulated body part, and a digitalized fifth instruction set for outputting simulation on a visualisation member.

The invention also relates to a system for an interventional procedure simulation, the system comprising a control unit and an interface unit, the system further comprising: means for communication between the control unit and the interface unit for receiving at least one instrument used in the interventional procedure, means for receiving three-dimensional information on a body part to be simulated, means for generating control signals relating to an interaction between the instruments and a surrounding geometry relating to a part of the simulated body part. The three-dimensional information is obtained through a scanning process.

The invention also relates to a system for an interventional procedure simulation learning, the system comprising a control unit and an interface unit, the system further comprising: means for communication between the control unit and the interface unit for receiving at least one instrument used in the interventional procedure, means for receiving three-dimensional information on a body part to be simulated, means for generating control signals relating to an interaction between the instruments and a surrounding geometry relating to a part of the simulated body part, and means for recording the simulation.

The invention also relates to a method of an interventional procedure training, using a system comprising a control unit and an interface unit, the method comprising: using an interventional procedure tool to be simulated in the interface device, simulating an interaction between the instruments and a surrounding geometry relating to a part of the simulated body part, using the simulation for training the user.

According to one aspect of the invention a method of facilitating an interventional procedure training, is provided by leasing a system comprising a control unit and an interface unit, the method comprising: using an interventional procedure tool to be simulated in the interface device, simulating an interaction between the instruments and a surrounding geometry relating to a part of the simulated body part, and using the simulation for training the user.

The invention is not limited to the shown embodiments but can be varied in a number of ways without departing from the scope of the appended claims and the arrangement and the method can be implemented in various ways depending on application, functional units, needs and requirements etc.

## Claims

1. A control unit (112) in an interventional procedure simulation system (100), said system comprising an interface unit (120, 500) in communication with said control unit (112) to simulate handling of a number of nested instruments (121-123) simultaneously interfaced by said interface unit (120, 500), each instrument being arranged to move and rotate independently of each other propagating said movement and rotation to other nested instruments (121-123), the control unit (112) comprising:
▪ a description of said instruments including instrument properties ,
▪ a three dimensional geometry representing a body cavity to be simulated,
▪ a first instruction set for handling and processing input from a user,
▪ a third instruction set for generating control signals relating to an interaction between said instruments and a surrounding geometry relating to a part of said simulated body part representing said body cavity, said control unit (112) being configured to:
handle and process input from said user and based on said input to generate a second instruction set,
based on said input, control said interface unit (120, 500), and
generate control signals relating to an interaction between said nested instruments (121-123) and a surrounding geometry relating to a part of said simulated body part,
***characterised in* that** said control unit (112) is further configured to receive information about a type of the nested real instruments (121-123) from a detection member in said interface unit (120-500) and to generate said control signals with respect to movement of said nested real instruments (121-123).

2. The control unit of claim 1, wherein said interventional procedure is at least one of a diagnostic, a cardiovascular or endovascular simulation system.

3. The control unit of one of claims 1 - 2, wherein a user's movements of said instruments, a surrounding simulated anatomy and other present instruments, affect a shape of an instrument simulated and displayed.

4. The control unit of claim 3, further configured to: for each instrument calculate collisions with simulated surrounding, which affects the shape and position of said instrument in said simulated body part.

5. The control unit of any of preceding claims, wherein said instrument is a distal part of a tool, or unique features at the distal end of a tool.

6. The control unit of any of preceding claims, wherein said real instrument comprises one or several of balloons, stents, electrodes, wires, catheters or distal protection.

7. The control unit of claim 6, wherein each instrument type has different properties associated with it and provided as an instruction set, which describes substantially all properties of said instrument.

8. The control unit of claim 7, wherein the properties of said instruments further describe interaction with surrounding geometry, visual properties, stiffness or shape.

9. The control unit of any of preceding claims, wherein the system comprises a model (210) used for rendering objects depending on properties to be displayed and a collision model (220) for computing collisions between the simulated instrument and body part.

10. The control unit according to any of preceding claims, wherein a model of said body or part of said body part is a three-dimensional data obtained through a body scanning.

11. A method for simulating an interventional procedure, the method comprising:
▪ using a control unit and an interface unit, said control unit (112) communicating with said interface unit (120, 500) to simulate handling of a number of nested real instruments (121-123) simultaneously interfaced by said interface unit (120-500) and that each nested instrument can be moved and rotated independently of the other and said movements and rotations are propagated to other instruments,
▪ receiving and processing input from said user,
▪ based on said input controlling said interface,
▪ retrieving information about said instrument, said information comprising properties for said real nested instruments,
▪ providing a data set comprising data on a body cavity to be simulated, and **characterised in that** said control unit (112) receives information on type of nested real instruments from a detection member in said interface unit (120, 500) and generates said control signals with respect to movement of said nested real instruments (121-123).

12. The method of claim 11, further comprising changing instrument simulated and displayed based on a user's movements of said instruments, a surrounding simulated anatomy and other present instruments, effect a shape of an instrument simulated and displayed.

13. The method of any one of claims 11-12, wherein an instrument is a distal part of a tool, or unique features at the distal end of a tool.

14. The method of any one of claims 11-13, wherein different instrument types includes balloons, stents, electrodes, wires, catheters or distal protection.

15. The method of claim 14, wherein each instrument type has different properties associated with it and provided as an instruction set, which describes substantially all properties of said instrument.

16. The method of claim 14, wherein the properties of said instruments further describe interaction with surrounding geometry, visual properties, stiffness or shape.

17. A system (100) for an interventional procedure simulation, said system comprising a control unit (112) according to any of claims 1-10.

18. The system of claim 17 wherein characteristics of a body part to be simulated are obtained through a scanning process.

19. A computer program product for interventional procedure simulation in control unit according to any of claims 1-10, the computer program product comprising :
▪ a communication instruction set for communication between said control unit (112) configured to receive information on type of nested real instruments (121-123) from a detection member in said interface unit and generate control signals with respect to movement of said instruments, and said interface unit (120, 500),
▪ a first instruction set for simulating handling of a number of simulated nested instruments (121-123), independently movable and rotatable, simultaneously interfaced by said interface unit (120, 500), said control unit further comprising instruction sets, comprising:
▪ a second instruction set for handling and processing input from said user,
▪ a third instruction set for controlling said interface unit (120, 500),
▪ a first data set comprising characteristics for said instruments (121-123),
▪ a second data set comprising data on a body part to be simulated,
▪ a fourth instruction set for generating control signals relating to an interaction between said simulated nested instruments (121-123) and a surrounding geometry relating to a part of said simulated body part, and
▪ a fifth instruction set for outputting simulation on a visualisation member.

20. A program storage device readable by a machine and encoding a program of instructions for executing the computer program stored on a computer readable medium for interventional procedure simulation according to claim 19.

## Patentansprüche

1. Steuereinheit (112) in einem Simulationssystem für Interventionsverfahren (100), umfassend eine Schnittstelleneinheit (120, 500), die mit der Steuerungseinheit (112) kommuniziert, um die Handhabung einer Anzahl von verschachtelten Instrumenten (121-123) zu simulieren, die mittels der Schnittstelleneinheit (120, 500) über Schnittstellen verbunden sind, wobei jedes Instrument so angeordnet ist, dass es sich unabhängig voneinander bewegt und dreht, wobei sich die Bewegung und die Drehung auf andere verschachtelte Instrumente (121, 123) ausbreitet, die Steuereinheit (112) umfassend:
▪ eine Beschreibung der Instrumente einschließlich Instrumenteigenschaften,
▪ eine dreidimensionale Geometrie, die einen Körperhohlraum darstellt, der simuliert werden soll,
▪ einen ersten Befehlssatz zum Handhaben und der Verarbeitung von Benutzereingaben,
▪ einen dritten Befehlssatz zum Erzeugen von Steuersignalen, die sich auf eine Wechselwirkung zwischen den Instrumenten und einer Umgebungsgeometrie beziehen, die sich auf einen Teil des simulierten Körperteils, der den Körperhohlraum darstellt, bezieht, wobei die Steuereinheit (112) ausgelegt ist zum:
Handhaben und Verarbeiten der Benutzereingabe und basierend auf der Eingabe, einen zweiten Befehlssatz zu erzeugen,
basierend auf der Eingabe, Steuern der Schnittstelleneinheit (120, 500) und Erzeugen von Steuersignalen, die sich auf eine Wechselwirkung zwischen den Instrumenten (121-123) und einer Umgebungsgeometrie beziehen, die sich auf einen Teil des simulierten Körperteils bezieht, **dadurch gekennzeichnet, dass** die Steuereinheit (112) ferner ausgelegt ist, um Informationen über einen Typ der verschachtelten realen Instrumente (121-123) von einem Erfassungselement in der Schnittstelleneinheit (120, 500) zu empfangen und die Steuersignale bezüglich der Bewegung der verschachtelten realen Instrumente (121-123) zu erzeugen.

2. Steuereinheit nach Anspruch 1, wobei das Interventionsverfahren mindestens eines von einem diagnostischen, einem kardiovaskulären oder endovaskulären Simulationssystem ist.

3. Steuereinheit nach einem der Ansprüche 1 bis 2, wobei die Bewegungen eines Benutzers der Instrumente, eine umgebende simulierte Anatomie und andere vorliegende Instrumente eine Form eines simulierten und angezeigten Instrumentes beeinflussen.

4. Steuereinheit nach Anspruch 3, die ferner ausgelegt ist, um: für jedes Instrument Kollisionen mit einer simulierten Umgebung zu berechnen, die die Form und Position des Instrumentes in dem simulierten Körperteil beeinflussen.

5. Steuereinheit nach einem der vorhergehenden Ansprüche, wobei das Instrument ein distaler Teil eines Werkzeugs oder einer einzigartigen Ausstattung am distalen Ende eines Werkzeugs ist.

6. Steuereinheit nach einem der vorhergehenden Ansprüche, wobei das reale Instrument einen oder mehrere Ballons, Stents, Elektroden, Drähte, Katheter oder distalen Schutz umfasst.

7. Steuereinheit nach Anspruch 6, wobei jeder Instrumententyp verschiedene damit verbundene Eigenschaften aufweist und als ein Befehlssatz bereitgestellt wird, der im Wesentlichen alle Eigenschaften des Instrumentes beschreibt.

8. Steuereinheit nach Anspruch 7, wobei die Eigenschaften der Instrumente ferner eine Wechselwirkung mit der Umgebungsgeometrie, den visuellen Eigenschaften, der Steifigkeit oder der Form beschreiben.

9. Steuereinheit nach einem der vorhergehenden Ansprüche, wobei das System ein Modell (210) zum Rendern von Objekten in Abhängigkeit von anzuzeigenden Eigenschaften und ein Kollisionsmodell (220) zum Berechnen von Kollisionen zwischen dem simulierten Instrument und dem Körperteil umfasst.

10. Steuereinheit nach einem der vorhergehenden Ansprüche, wobei ein Modell des Körpers oder eines Teils des Körperteils dreidimensionale Daten sind, die durch eine Körperabtastung erhalten werden.

11. Verfahren zum Simulieren eines Interventionsverfahrens, das Verfahren umfassend:
▪ Verwenden einer Steuereinheit und einer Schnittstelleneinheit, wobei die Steuereinheit (112) mit der Schnittstelleneinheit (120, 500) kommuniziert, um die Handhabung einer Anzahl von verschachtelten realen Instrumenten (121-123) zu simulieren, die mittels der Schnittstelleneinheit (120-500) über Schnittstellen verbunden sind, wobei jedes verschachtelte Instrument so angeordnet ist, dass es sich unabhängig voneinander bewegt und dreht, wobei sich die Bewegung und die Drehung auf andere Instrumente ausbreitet,
▪ Empfangen und Verarbeiten von Eingaben von dem Benutzer,
▪ basierend auf der Eingabe, steuern der Schnittstelle,
▪ Abrufen von Informationen über das Instrument, wobei die Informationen Eigenschaften für die tatsächlich verschachtelten Instrumente umfassen,
▪ Bereitstellen eines Datensatzes, der Daten über einen zu simulierende Körperhohlraum umfasst, und **dadurch gekennzeichnet, dass** die Steuereinheit (112) Informationen über den Typ verschachtelter realer Instrumente von einem Erfassungselement in der Schnittstelleneinheit (120, 500) empfängt und die Steuersignale in Bezug auf die Bewegung der verschachtelten realen Instrumente (121-123) erzeugt.

12. Verfahren nach Anspruch 11, ferner umfassend das Wechseln des simulierten und angezeigten Instrumentes basierend auf den Bewegungen eines Benutzers der Instrumente, eine umgebende simulierte Anatomie und andere vorliegende Instrumente, Beeinflussen einer Form eines simulierten und angezeigten Instrumentes.

13. Steuereinheit nach einem der vorhergehenden Ansprüche 11-12, wobei das Instrument ein distaler Teil eines Werkzeugs oder einer einzigartigen Ausstattung am distalen Ende eines Werkzeugs ist.

14. Steuereinheit nach einem der vorhergehenden Ansprüche 11-13, wobei verschiedene Instrumententypen Ballons, Stents, Elektroden, Drähte, Katheter oder distalen Schutz umfassen.

15. Verfahren nach Anspruch 14, wobei jeder Instrumententyp verschiedene damit verbundene Eigenschaften aufweist und als Befehlssatz bereitgestellt wird, der im Wesentlichen alle Eigenschaften des Instrumentes beschreibt.

16. Verfahren nach Anspruch 14, wobei die Eigenschaften der Instrumente ferner eine Wechselwirkung mit der Umgebungsgeometrie, den visuellen Eigenschaften, der Steifigkeit oder der Form beschreiben.

17. Simulationssystem (100) für ein Interventionsverfahren, wobei das System eine Steuereinheit (112) nach einem der Ansprüche 1 bis 10 umfasst.

18. System nach Anspruch 17, wobei Merkmale eines zu simulierenden Körperteils durch einen Abtastvorgang erhalten werden.

19. Computerprogrammprodukt für eine Simulation für Interventionsverfahren in einer Steuereinheit nach einem der Ansprüche 1 bis 10, das Computerprogrammprodukt umfassend:
▪ einen Kommunikationsbefehlssatz zur Kommunikation zwischen der Steuereinheit (112), die zum Empfangen von Informationen über den Typ verschachtelter realer Instrumente (121-123) von einem Erfassungselement in der Schnittstelleneinheit und zum Erzeugen von Steuersignalen bezüglich der Bewegung der Instrumente und der Schnittstelleneinheit (120, 500) ausgelegt ist,
▪ einen ersten Befehlssatz zum Simulieren der Handhabung einer Anzahl von simulierten verschachtelten Instrumenten (121-123), die unabhängig bewegbar und drehbar sind, gleichzeitig durch die Schnittstelleneinheit (120, 500) über Schnittstellen verbunden sind, wobei die Steuereinheit ferner Befehlssätze umfasst:
▪ einen zweiten Befehlssatz zum Handhaben und Verarbeiten der Eingabe von dem Benutzer,
▪ einen dritten Befehlssatz zum Steuern der Schnittstelleneinheit (120, 500),
▪ einen ersten Datensatz, der Merkmale für die Instrumente umfasst (121-123),
▪ einen zweiten Datensatz, der Merkmale eines zu simulierenden Körperteils umfasst,
▪ einen vierten Befehlssatz zum Erzeugen von Steuersignalen, die sich auf eine Wechselwirkung zwischen den simulierten verschachtelten Instrumenten (121-123) und einer Umgebungsgeometrie beziehen, die sich auf einen Teil des simulierten Körperteils bezieht, und
▪ einen fünften Befehlssatz zum Ausgeben einer Simulation auf einem Visualisierungselement.

20. Programmspeichervorrichtung, die von einer Maschine lesbar ist, und Kodieren von einem Programm von Anweisungen zum Ausführen des Computerprogramms, das auf einem computerlesbaren Medium für eine Simulation für Interventionsverfahren nach Anspruch 19 gespeichert ist.

## Revendications

1. Unité de commande (112) dans un système de simulation de procédure d'intervention (100), ledit système comprenant une unité d'interface (120, 500) en communication avec ladite unité de commande (112) pour simuler la manipulation d'un nombre d'instruments imbriqués (121-123) interfacés simultanément par ladite unité d'interface (120, 500), chaque instrument étant agencé pour se déplacer et tourner indépendamment par rapport aux autres en propageant lesdits déplacement et rotation aux autres instruments imbriqués (121-123), l'unité de commande (112) comprenant :
▪ une description desdits instruments incluant des propriétés des instruments,
▪ une géométrie tridimensionnelle représentant une cavité corporelle à simuler,
▪ un premier ensemble d'instructions pour manipuler et traiter une entrée provenant d'un utilisateur,
▪ un troisième ensemble d'instructions pour générer des signaux de commande concernant une interaction entre lesdits instruments et une géométrie environnante concernant une partie de ladite partie corporelle simulée représentant ladite cavité corporelle,
ladite unité de commande (112) étant configurée pour :
manipuler et traiter une entrée provenant dudit utilisateur et sur la base de ladite entrée pour générer un deuxième ensemble d'instructions,
sur la base de ladite entrée, commander ladite unité d'interface (120, 500), et
générer des signaux de commande concernant une interaction entre lesdits instruments imbriqués (121-123) et une géométrie environnante concernant une partie de ladite partie corporelle simulée,
***caractérisée en ce que*** ladite unité de commande (112) est en outre configurée pour recevoir des informations au sujet d'un type des instruments réels imbriqués (121-123) depuis un élément de détection dans ladite unité d'interface (120-500) et pour générer lesdits signaux de commande relativement à un déplacement desdits instruments réels imbriqués (121-123).

2. Unité de commande selon la revendication 1, dans laquelle ladite procédure d'intervention est au moins un parmi un diagnostic, un système de simulation cardio-vasculaire ou endovasculaire.

3. Unité de commande selon une des revendications 1 et 2, dans laquelle des déplacements desdits instruments par l'utilisateur, une anatomie simulée environnante et d'autres instruments présents influent sur une forme d'un instrument simulé et affiché.

4. Unité de commande selon la revendication 3, configurée en outre pour : pour chaque instrument, calculer des collisions avec un environnement simulé, ce qui influe sur la forme et la position dudit instrument dans ladite partie corporelle simulée.

5. Unité de commande selon l'une quelconque des revendications précédentes, dans laquelle ledit instrument est une partie distale d'un outil, ou des caractéristiques uniques au niveau de l'extrémité distale d'un outil.

6. Unité de commande selon l'une quelconque des revendications précédentes, dans laquelle ledit instrument réel comprend un ou plusieurs parmi des ballons, des endoprothèses, des électrodes, des fils, des cathéters ou une protection distale.

7. Unité de commande selon la revendication 6, dans laquelle chaque type d'instrument a différentes propriétés qui lui sont associées et fournies en tant qu'ensemble d'instructions, qui décrit sensiblement toutes les propriétés dudit instrument.

8. Unité de commande selon la revendication 7, dans laquelle les propriétés desdits instruments décrivent en outre une interaction avec une géométrie environnante, des propriétés visuelles, une rigidité ou une forme.

9. Unité de commande selon l'une quelconque des revendications précédentes, dans laquelle le système comprend un modèle (210), utilisé pour rendre des objets en fonction de propriétés à afficher, et un modèle de collision (220) pour calculer des collisions entre l'instrument simulé et la partie corporelle simulée.

10. Unité de commande selon l'une quelconque des revendications précédentes, dans laquelle un modèle dudit corps ou une partie de ladite partie corporelle est une donnée tridimensionnelle obtenue par un balayage du corps.

11. Procédé de simulation d'une procédure d'intervention, le procédé comprenant :
▪ l'utilisation d'une unité de commande et d'une unité d'interface, ladite unité de commande (112) communiquant avec ladite unité d'interface (120, 500) pour simuler la manipulation d'un nombre d'instruments réels imbriqués (121-123) interfacés simultanément par ladite unité d'interface (120-500) et chaque instrument imbriqué peut être déplacé et tourné indépendamment par rapport aux autres et lesdits déplacements et rotations sont propagés aux autres instruments,
▪ la réception et le traitement d'une entrée en provenance dudit utilisateur,
▪ sur la base de ladite entrée, la commande de ladite interface,
▪ la récupération d'informations au sujet dudit instrument, lesdites informations comprenant des propriétés pour lesdits instruments imbriqués réels,
▪ la fourniture d'un ensemble de données comprenant des données sur une cavité corporelle à simuler, et
**caractérisé en ce que** ladite unité de commande (112) reçoit des informations sur un type d'instruments réels imbriqués depuis un élément de détection dans ladite unité d'interface (120, 500) et génère lesdits signaux de commande relativement au déplacement desdits instruments réels imbriqués (121-123).

12. Procédé selon la revendication 11, comprenant en outre que le changement d'un instrument simulé et affiché sur la base de déplacements desdits instruments par l'utilisateur, une anatomie simulée environnante et d'autres instruments présents influent sur une forme d'un instrument simulé et affiché.

13. Procédé selon l'une quelconque des revendications 11 et 12, dans lequel un instrument est une partie distale d'un outil ou des caractéristiques uniques au niveau de l'extrémité distale d'un outil.

14. Procédé selon l'une quelconque des revendications 11 à 13, dans lequel différents types d'instruments incluent des ballons, des endoprothèses, des électrodes, des fils, des cathéters ou une protection distale.

15. Procédé selon la revendication 14, dans lequel chaque type d'instrument a différentes propriétés qui lui sont associées et fournies en tant qu'ensemble d'instructions, qui décrit sensiblement toutes les propriétés dudit instrument.

16. Procédé selon la revendication 14, dans lequel les propriétés desdits instruments décrivent en outre une interaction avec une géométrie environnante, des propriétés visuelles, une rigidité ou une forme.

17. Système (100) de simulation d'une procédure d'intervention, ledit système comprenant une unité de commande (112) selon l'une quelconque des revendications 1 à 10.

18. Système selon la revendication 17 dans lequel des caractéristiques d'une partie corporelle à simuler sont obtenues par un processus de balayage.

19. Produit-programme d'ordinateur pour la simulation d'une procédure d'intervention dans une unité de commande selon l'une quelconque des revendications 1 à 10, le produit-programme d'ordinateur comprenant :
▪ un ensemble d'instructions de communication pour une communication entre ladite unité de commande (112), configurée pour recevoir des informations sur un type d'instruments réels imbriqués (121-123) depuis un élément de détection dans ladite unité d'interface et générer des signaux de commande relativement au déplacement desdits instruments, et ladite unité d'interface (120, 500),
▪ un premier ensemble d'instructions pour simuler une manipulation d'un nombre d'instruments imbriqués simulés (121-123), pouvant être déplacés et tournés indépendamment, interfacés simultanément par ladite unité d'interface (120, 500), ladite unité de commande comprenant en outre des ensembles d'instructions, comprenant :
▪ un deuxième ensemble d'instructions pour manipuler et traiter une entrée provenant dudit utilisateur,
▪ un troisième ensemble d'instructions pour commander ladite unité d'interface (120, 500),
▪ un premier ensemble de données comprenant des caractéristiques pour lesdits instruments (121-123),
▪ un second ensemble de données comprenant des données sur une partie corporelle à simuler,
▪ un quatrième ensemble d'instructions pour générer des signaux de commande concernant une interaction entre lesdits instruments imbriqués simulés (121-123) et une géométrie environnante concernant une partie de ladite partie corporelle simulée, et
▪ un cinquième ensemble d'instructions pour délivrer une simulation sur un élément de visualisation.

20. Dispositif de stockage de programme lisible par une machine et codant un programme d'instructions aux fins d'exécution du programme d'ordinateur stocké sur un support lisible par ordinateur pour la simulation d'une procédure d'intervention selon la revendication 19.
